(19) Europäisches Patentamt
European Patent Office
Office européen des brevets

(11) **EP 4 632 222 A1**

(12) **EUROPÄISCHE PATENTANMELDUNG**

(43) Veröffentlichungstag:
**15.10.2025   Patentblatt 2025/42**

(21) Anmeldenummer: **24169659.0**

(22) Anmeldetag: **11.04.2024**

(51) Internationale Patentklassifikation (IPC):
***F03D 17/00*** *(2016.01)*

(52) Gemeinsame Patentklassifikation (CPC):
**F03D 17/00;** F05B 2270/1095; F05B 2270/331;
F05B 2270/802; F05B 2270/803

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Wobben Properties GmbH**
**26607 Aurich (DE)**

(72) Erfinder:
• **SCHAPER, Ulf**
**27254 Staffhorst (DE)**
• **BUNGE, Frank**
**67063 Ludwigshafen (DE)**
• **EDEN, Georg**
**26556 Westerholt (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM KALIBRIEREN EINER MESSEINRICHTUNG EINER WINDENERGIEANLAGE**

(57)    Die Erfindung betrifft ein Verfahren zum Kalibrieren einer Messeinrichtung zur Lastmessung eines Rotorblattes einer Windenergieanlage, wobei die Windenergieanlage einen Rotor mit einer Rotorachse und mehreren in ihrem Blattwinkel verstellbaren Rotorblättern aufweist, und für jeweils ein Rotorblatt, zur Kalibrierung wenigstens ein Umrechnungsfaktor zum Umrechnen eines erfassten Sensorwertes eines Lastsensors in einen auf das Rotorblatt, insbesondere im Bereich ihrer Blattwurzel, wirkenden Lastwert bestimmt wird, in einem Erfassungsschritt durch den Lastsensor ein Sensorwert aufgenommen wird, und der Umrechnungsfaktor aus einem Zusammenhang zwischen in dem Erfassungsschritt erfasstem Sensorwert und dabei auf das Rotorblatt wirkender Vergleichskraft berechnet wird, wobei die Vergleichskraft in Abhängigkeit von einer auf das Rotorblatt wirkenden Gewichtskraft berechnet wird, und die Vergleichskraft zusätzlich in Abhängigkeit von einem Korrekturanteil bestimmt wird, der eine Abweichung zwischen Vergleichskraft und Gewichtskraft berücksichtigt.

Fig. 4B

**Beschreibung**

Die vorliegende Erfindung betrifft ein Verfahren zum Kalibrieren einer Messeinrichtung zur Lastmessung eines Rotorblattes einer Windenergieanlage. Die Erfindung betrifft zudem eine entsprechende Vorrichtung zum Durchführen eines solchen Verfahrens zum Kalibrieren.

Windenergieanlagen erzeugen elektrische Leistung aus Wind und weisen dazu üblicherweise einen Rotor mit mehreren, insbesondere drei Rotorblättern auf. Dabei erfahren die Rotorblätter entsprechende Kräfte aus dem Wind, die die Rotorblätter beschädigen können bzw. die Lebensdauer der Rotorblätter verringern können, wenn diese zu große und/oder zu oft große Werte aufweisen. Besonders kann eine Blattschlaglast bzw. ein entsprechend auf jeweils ein Rotorblatt wirkendes Schlaglastmoment von Bedeutung sein.

Um solche Lasten zu erkennen, können entsprechende Lastsensoren an den Rotorblättern, insbesondere im Bereich ihrer Blattwurzeln, vorgesehen sein.

Blattlasten von Rotorblättern werden üblicherweise indirekt über die Materialdehnung gemessen. Dazu kommen Messgeräte zum Einsatz, die kleinräumig Dehnungen aufnehmen, z. B. Dehnungsmessstreifen (DMS) oder Lichtwellenleiter mit Faser-Bragg-Gitter. Die Blattlasten werden aus diesen Messungen bestimmt durch Offsetkorrektur und Multiplikation mit einem Kalibrierfaktor (Verstärkungsfaktor). Der Kalibrierfaktor beinhaltet (unter anderem) das als konstant angenommene Verhältnis zwischen den kleinräumigen Dehnungen an der Messstelle und der großräumig wirkenden Rotorblattlast (z. B. Blattwurzelbiegemoment). Üblicherweise wird der Kalibrierfaktor in einer Situation bestimmt, in der die wirkende Rotorblattlast bekannt ist, sodass der Kalibrierfaktor durch Division der bekannten Rotorblattlast und der dann erfassten lokalen Dehnung bestimmt wird. Wenn nicht direkt die lokale Dehnung gemessen wird, sondern eine damit in Verbindung stehende Messgröße wie die Differenzspannung einer DMS-Messbrücke oder die Wellenlängenverschiebung eines Faser-Bragg-Gitters, so kann der Kalibrierfaktor diese Effekte des Messsystems mitberücksichtigen.

Die als bekannt angenommene Rotorblattlast während des Kalibrierverfahrens ist üblicherweise die Gravitationslast, d. h. sie wird aus der als bekannt angenommenen Bauteilmasse und Bauteillage im Raum bestimmt. Dabei werden Trägheitskräfte und weitere am Bauteil angreifende Kräfte wie Aerodynamik vernachlässigt. Der Kalibrierfaktor kann auch synonym als Umrechnungsfaktor bezeichnet werden.

Durch den Kalibrierfaktor bzw. Umrechnungsfaktor wird somit ein Zusammenhang geschaffen zwischen dem Ausgangssignal des Sensors und dem zugeordneten Lastwert, also insbesondere Lastmoment. Ein solcher Zusammenhang kann - vereinfachend ausgedrückt - bei Windstille und stehendem Rotor aus der Gewichtskraft auf das betreffende Rotorblatt abgeleitet werden. Die Gewichtskraft bzw. das aufgrund der Geometrie und Gewichtsverteilung des betreffenden Rotors wirkende Lastmoment sind bekannt, weil eben diese Geometrie des Rotorblattes einschließlich seiner Gewichte bekannt ist. Insbesondere bei waagerechter Stellung des betreffenden Rotorblattes kann also ein aus der Gewichtskraft resultierendes Lastmoment bestimmt werden und dann ein Zusammenhang zu dem in dem Moment anstehenden Sensorsignal gebildet werden.

Es hat sich aber gezeigt, dass es vorteilhaft sein kann, nicht nur bei stehender Anlage zu kalibrieren, sondern bei drehender. Besonders ist dadurch eine dynamischere Kalibrierung möglich und auch eine Wiederholung der Kalibrierung. Es kann nämlich vorteilhaft sein, die Kalibrierung regelmäßig zu wiederholen. Wird die Kalibrierung auch bei hohen Windgeschwindigkeiten durchgeführt, insbesondere auch bei Starkwind, können große Fehler durch den Einfluss des Windes entstehen, weil solche aerodynamischen Einflüsse dann nicht mehr vernachlässigt werden können.

Der vorliegenden Erfindung liegt somit die Aufgabe zugrunde, zumindest eins der genannten Probleme zu adressieren. Insbesondere soll eine Lösung vorgeschlagen werden, bei der eine Kalibrierung auch außerhalb von Windstille durchgeführt werden kann bzw. gegenüber dem Stand der Technik mit einer verbesserten Genauigkeit bei Starkwind durchgeführt werden kann. Zumindest soll zu bisher bekannten Lösungen eine alternative Lösung vorgeschlagen werden.

Erfindungsgemäß wird ein Verfahren nach Anspruch 1 vorgeschlagen. Ein solches Verfahren betrifft das Kalibrieren einer Messeinrichtung zur Lastmessung eines Rotorblattes einer Windenergieanlage. Eine solche Windenergieanlage weist einen Rotor mit einer Rotorachse und mehreren in ihrem Blattwinkel verstellbaren Rotorblättern auf. Üblicherweise sind drei Rotorblätter vorgesehen, die im Wesentlichen diesen Rotor bilden und im Betrieb um die Rotorachse drehen.

Es ist weiter vorgesehen, für jeweils ein Rotorblatt zur Kalibrierung wenigstens einen Umrechnungsfaktor zur Umrechnung eines erfassten Sensorwertes eines Lastsensors in einen auf das Rotorblatt, insbesondere im Bereich seiner Blattwurzel, wirkenden Lastwert zu bestimmen. Ein solcher Umrechnungsfaktor kann auch als Kalibrierungsfaktor oder Verstärkungsfaktor jeweils synonym bezeichnet werden.

Ein solcher Umrechnungsfaktor ist also ein proportionaler Wert, der insoweit eine Proportionalität zwischen dem Sensorwert und dem Lastwert herstellt. Als Sensor kann besonders ein Sensor verwendet werden, der eine Dehnung erfasst, wie oben erläutert wurde, und proportional zur Dehnung den Sensorwert ausgibt. Es kann aber auch ein Offset zusätzlich vorhanden sein, der insbesondere für den Sensorwert eine Offsetkorrektur vornimmt. Der Umrechnungsfaktor kann insoweit Teil einer Umrechnungsfunktion sein. Im einfachsten Fall kommt aber auch in Betracht, dass lediglich der Umrechnungsfaktor vorhanden ist, wobei die Offsetkorrektur üblicherweise vorhanden ist. Es kann aber auch eine Umrechnungsfunktion vorhanden sein, die mehrere Umrechnungsfaktoren aufweisen kann. Oftmals reicht aber ein Umrechnungsfaktor.

Dazu wird nun vorgeschlagen, dass in einem Erfassungsschritt durch den Lastsensor ein Sensorwert aufgenommen wird. Der Umrechnungsfaktor wird dann aus einem Zusammenhang zwischen dem Sensorwert, der in dem Erfassungsschritt erfasst wurde, und einer Vergleichskraft hergestellt. Die Vergleichskraft ist die, die in dem Erfassungsschritt auf das Rotorblatt wirkt und bekannt ist bzw. berechnet werden kann.

Insoweit wird die Vergleichskraft in Abhängigkeit von einer auf das Rotorblatt wirkenden Gewichtskraft berechnet. Die Berechnung kann beispielsweise so durchgeführt werden, dass eine Masse des Rotorblattes mit der Erdbeschleunigung g multipliziert wird und dem Abstand zwischen einem Gewichtsschwerpunkt des Rotorblattes und der Blattwurzel bzw. dem Blattwurzelbereich, in dem der Lastsensor angeordnet ist. Die Vergleichskraft kann als zur Gewichtskraft ähnliche Kraft verstanden werden und kann dieser im Idealfall entsprechen. Es wird aber vorgeschlagen, die Vergleichskraft zusätzlich in Abhängigkeit von einem Korrekturanteil zu bestimmen, der eine Abweichung zwischen Vergleichskraft und Gewichtskraft berücksichtigt. Insoweit sind also die Vergleichskraft und die Gewichtskraft nicht identisch.

Es wird vorgeschlagen, das Verfahren besonders auch bei vorhandenem Wind und sich drehendem Rotor anzuwenden, insbesondere auch bei hohen Windgeschwindigkeiten. Dadurch ist eine Kalibrierung auch bei hohen Windgeschwindigkeiten gut möglich, und es braucht keine Windstille oder Situation mit wenig Wind abgewartet zu werden um den Umrechnungsfaktor zu bestimmen. Wenn der Umrechnungsfaktor bei viel Wind ermittelt wird, so könnte er dadurch verfälscht sein und mit dem Korrekturanteil korrigiert werden. Dieser Korrekturanteil ist insoweit windabhängig. Das Verfahren kann aber auch bei Windstille eingesetzt werden. Dann kann der Korrekturanteil 0 sein, bzw. 1, wenn er multiplikativ angewendet wird.

Jedenfalls wird vorgeschlagen, einen solchen Korrekturanteil zu bestimmen und entsprechend zu berücksichtigen und damit die Vergleichskraft gegenüber der Gewichtskraft zu verbessern. Die Kalibrierung wird dann basierend auf dem Sensorwert, der im Erfassungsschritt aufgenommen wurde, und der, wie beschrieben, verbesserten Vergleichskraft berechnet.

Gemäß einem Aspekt wird vorgeschlagen, dass der Korrekturanteil in Abhängigkeit von einer aerodynamischen Kraft, die auf das Rotorblatt wirkt, bestimmt wird und/oder in Abhängigkeit von einer Achsneigung der Rotorachse bestimmt wird. Insbesondere wird vorgeschlagen, dass der Korrekturanteil in Abhängigkeit von einer aerodynamischen, aufwärts gerichteten Kraft berücksichtigt wird, die durch Wind hervorgerufen ist und aufgrund der Achsneigung des Rotors einen Auftrieb auf das Rotorblatt ausübt.

Hier wurde besonders erkannt, dass eine solche aerodynamische Kraft auftreten kann, die so auf das Rotorblatt wirkt, dass sie die Wirkung der Gewichtskraft verringert. Besonders anschaulich kann dies für waagerecht stehende Rotorblätter erläutert werden, wobei die Kraft nicht auf waagerechte Rotorblätter beschränkt ist. Besonders bei waagerecht stehenden Rotorblättern, also in der 9 Uhr-Stellung und 3 Uhr-Stellung des Rotors, bezogen auf das betrachtete Rotorblatt, kann eine Kraft aus Wind quasi von unten gegen das Rotorblatt strömen und dadurch die Gewichtskraft verringern.

Hier ist besonders von Bedeutung, dass diese aerodynamische Kraft in 9 Uhr-Stellung des Rotorblattes und in 3 Uhr-Stellung des Rotorblattes die entgegengesetzte Richtung der Gewichtskraft aufweist. Das ist insoweit ungewöhnlich, da aerodynamische Kräfte auf die Rotorblätter eines Rotors üblicherweise im Zusammenhang mit der Drehrichtung des Rotors stehen, denn sie ergeben sich meist aufgrund des Profils des Rotorblattes und das ist so ausgelegt, dass eine Kraft zum Drehen des Rotors resultieren soll. Vereinfachend ausgedrückt würde eine solche Kraft üblicherweise auf ein Rotorblatt in 9 Uhr-Stellung nach oben und auf dasselbe Rotorblatt in 3 Uhr-Stellung nach unten gerichtet sein, oder umgekehrt. Dass sie aber in beiden Fällen, also für die 9 Uhr-Stellung und die 3 Uhr-Stellung, nach oben gerichtet ist, ist hier als Besonderheit erkannt worden. Genau diese Besonderheit wird nun berücksichtigt, um die Vergleichskraft gegenüber der Gravitationskraft entsprechend anzupassen bzw. zu korrigieren.

Besonders kann eine solche aerodynamische Kraft aus dem Wind, die der Gravitationskraft entgegengesetzt ist, durch eine Achsneigung der Rotorachse entstehen. Wenn die Rotorachse geneigt ist, nämlich so, dass der Rotor im Turmbereich von dem Turm weggekippt wird, kann diese Kraft entstehen. Veranschaulichend ausgedrückt strömt ein waagerechter Wind aufgrund der Achsneigung des Rotors die Rotorblätter trotzdem etwas von unten an.

Solche Kräfte können in Simulationen oder Vergleichstests einer repräsentativen Windenergieanlage erfasst werden.

Gemäß einem Aspekt wird vorgeschlagen, dass das Kalibrieren vollständig oder teilweise im laufenden Betrieb der Windenergieanlage durchgeführt wird und/oder in einem Schutzbetrieb durchgeführt wird, in dem die Rotorblätter in einer Schutzbetriebsstellung stehen, die um maximal 30° von einer Fahnenstellung abweicht. Insbesondere wird vorgeschlagen, dass der Erfassungsschritt im laufenden Betrieb oder im Schutzbetrieb der Windenergieanlage durchgeführt wird.

Es wird somit insbesondere vorgeschlagen, das Verfahren nicht nur im Stillstand bei Windstille oder sehr schwachem Wind durchzuführen. Dadurch ist die Kalibrierung nicht auf solche seltenen Situationen beschränkt, sondern kann öfter durchgeführt werden. Auch das Durchführen einer Kalibrierung vor und auch nach einer Starkwindperiode ist möglich, um mögliche Veränderungen zu berücksichtigen. Besonders vor einer Starkwindperiode oder Starkwindsituation ist es wichtig, dass die Kalibrierung möglichst genau und fehlerfrei und an möglicherweise vorgefallene Veränderungen angepasst ist, um starke Belastungen in der Starkwindperiode bzw. Starkwindsituation richtig erkennen zu können.

Besonders bei starken Winden kommt in Betracht, dass die Windenergieanlage in einem Schutzbetrieb arbeitet oder sich zumindest in einem solchen befindet, in dem die Rotorblätter zum Schutz der Windenergieanlage in der Schutzbetriebsstellung stehen. Eine solche Schutzbetriebsstellung kann in der Nähe einer Fahnenstellung sein, unterscheidet sich aber von dieser. Vorzugsweise unterscheidet sie sich wenigstens um 5° von der Fahnenstellung, die etwa bei 90° liegt. Durch eine solche der Fahnenstellung ähnliche Stellung der Rotorblätterwird erreicht, dass wenig Belastung aus dem Wind auf den Rotorblättern lastet, gleichwohl etwas Auftrieb durch den Wind auf die Rotorblätter wirkt, sodass sich der Rotor etwas drehen kann. Dadurch können die Rotorblätter unterschiedliche Positionen einnehmen und dadurch auch Positionen einnehmen, in denen eine Kalibrierung besonders gut durchgeführt werden kann. Solche Positionen sind besonders solche, bei denen die Rotorblätter im Wesentlichen waagerecht stehen. Eine im Wesentlichen waagerechte Stellung ist eine, die um bis zu +/- 30°, insbesondere bis zu +/- 20° von einer waagerechten Stellung abweicht. Insbesondere weicht sie also um die genannten Werte von einer 9 Uhr-Stellung oder 3 Uhr-Stellung des Rotors, bezogen auf das jeweilige Rotorblatt, ab.

Das Kalibrieren wird insbesondere vollständig in dem laufenden Betrieb oder dem beschriebenen Schutzbetrieb durchgeführt. Es kommt aber beispielsweise auch in Betracht, dass das Kalibrieren nur insoweit teilweise im laufenden Betrieb oder im Schutzbetrieb durchgeführt wird, dass der Erfassungsschritt im laufenden Betrieb erfolgt oder im Schutzbetrieb erfolgt. Die Berechnung kann beispielsweise auch später erfolgen und muss nicht im laufenden Betrieb oder Schutzbetrieb durchgeführt werden. Zweckmäßigerweise erfolgt aber auch das Berechnen im laufenden Betrieb oder Schutzbetrieb.

Gemäß einem Aspekt wird vorgeschlagen, dass das Kalibrieren, insbesondere der Erfassungsschritt, zumindest teilweise bei hohen Windgeschwindigkeiten, oberhalb einer Nennwindgeschwindigkeit, insbesondere oberhalb einer Sturmwindgeschwindigkeit, bei der ein Anlagenbetrieb zum Schutz der Windenergieanlage reduziert wird, durchgeführt wird.

Das Kalibrieren, zumindest der Erfassungsschritt, wird somit zumindest teilweise bei hohen Windgeschwindigkeiten durchgeführt und ist damit nicht auf einen Teillastbetrieb beschränkt, oder auf einen Stillstand der Windenergieanlage. Eine Nennwindgeschwindigkeit ist bereits eine hohe Windgeschwindigkeit, denn ab dieser wird die Windenergieanlage in ihrem Betrieb auf Nenndrehzahl und Nennleistung beschränkt. Aber auch das Kalibrieren bei noch höherer Windgeschwindigkeit, die oberhalb einer Sturmwindgeschwindigkeit liegt, wird vorgeschlagen. Damit kann auch bei hohen Windgeschwindigkeiten eine Kalibrierung durchgeführt werden und damit können schnell Veränderungen, die die Kalibrierung betreffen, berücksichtigt werden.

Eine Sturmwindgeschwindigkeit ist eine solche, bei der historisch die Windenergieanlage abgeschaltet wurde, um sie zu schützen. Moderne Windenergieanlagen legen eine solche Sturmwindgeschwindigkeit weiterhin zugrunde, sie kann beispielsweise bei 20 bis 25 m/s liegen, schalten die Windenergieanlage aber nicht ab, sondern reduzieren den Anlagenbetrieb, indem die Drehzahl und Leistung der Windenergieanlage reduziert wird, nämlich unter Nenndrehzahl bzw. unter Nennleistung.

Außerdem oder alternativ wird vorgeschlagen, dass das Kalibrieren, insbesondere der Erfassungsschritt, zumindest teilweise bei einer etwa waagerechten Position des Rotorblattes bzw. etwa bei einer 9 Uhr- oder 3 Uhr-Position des Rotors, bezogen auf das Rotorblatt durchgeführt wird. Die Vorteile davon wurden oben schon beschrieben und eine Erfassung kann am besten bei einer 9 Uhr- oder 3 Uhr-Position durchgeführt werden. Weicht die Position des Rotorblattes davon etwas ab, kann weiterhin eine gute Erfassung bzw. gute Kalibrierung durchgeführt werden. Eine solche Abweichung kann bei bis zu 30°, insbesondere bis zu 20° liegen und dann kann noch von einer Position gesprochen werden, die etwa waagerecht ist.

Solche etwa waagerechten Positionen des Rotorblattes können auch im laufenden Betrieb und auch bei hohen Windgeschwindigkeiten oberhalb der Nennwindgeschwindigkeit und auch oberhalb der Sturmwindgeschwindigkeit auftreten und zur Kalibrierung verwendet werden.

Wichtig ist, dass bei solchen hohen Windgeschwindigkeiten Fehler durch aerodynamische Einflüsse korrigiert oder herausgerechnet werden, wie erfindungsgemäß vorgeschlagen wird. Erfolgt nämlich eine solche Berücksichtigung eines Korrekturanteils, können die Vorteile der Kalibrierung auch bei hohen Windgeschwindigkeiten genutzt werden, während Probleme durch die hohen Windgeschwindigkeiten behoben oder zumindest reduziert werden.

Gemäß einem Aspekt wird vorgeschlagen, dass der Korrekturanteil durch eine Simulation und/oder durch Vergleichsmessungen bestimmt wird. Der Korrekturanteil kann komplexe aerodynamische Zusammenhänge berücksichtigen, sodass auch seine Bestimmung komplex sein kann. Daher wird die Verwendung einer Simulation vorgeschlagen. Der Korrekturanteil hängt besonders von Form und Stellung des Rotorblattes ab, einschließlich der Achsneigung der Rotorachse. All diese Daten sind aber bekannt und können daher in einer Simulation berücksichtigt werden. Beispielsweise können unterschiedliche Situationen, insbesondere Windsituationen, Stellungen des Rotors und Rotorblattes bezogen auf den Blattwinkel berücksichtigt werden. Dazu kann eine Simulation zum Verhalten der Windenergieanlage durchgeführt werden und Ergebnisse in einer Tabelle hinterlegt werden, die dann zur Kalibrierung abgerufen werden können. Zwischenwerte können durch Interpolation berücksichtigt werden.

Auf ähnliche Art und Weise können auch Vergleichsmessungen durchgeführt werden. Hier können statt einer Simulation, oder ergänzend dazu, Belastungsmessungen mit ergänzenden Lastsensoren und/oder anderweitiger Aufnahme von Blattlasten durchgeführt werden. Solche Vergleichsmessungen können mit einer Windenergieanlage desselben Typs durchgeführt werden wie die Windenergieanlage, für die die Kalibrierung durchgeführt werden soll. Die Vergleichsmessungen müssen also nicht mit derselben Windenergieanlage durchgeführt werden. Auch Korrekturanteile, die durch Vergleichsmessungen bestimmt wurden, können zusammen mit den jeweils vorgelegenen Randbedingungen in einer Tabelle abgespeichert werden. Die Korrekturanteile können dann jeweils aus der Tabelle bei gleichen Randbedingungen abgerufen werden und Zwischenwerte können interpoliert werden.

Besonders geht es hier um einen Korrekturanteil, der einen die Wirkung der Gewichtskraft auf das Rotorblatt verändernden systematischen Einfluss berücksichtigt, insbesondere herausrechnet. Besonders geht es also um eine Kraft, die der Gewichtskraft entgegenwirkt, und zwar sowohl bei der 9 Uhr-Stellung als auch der 3 Uhr-Stellung, oder ähnlichen Werten. Besonders um einen solchen Korrekturanteil geht es, der nämlich nicht dadurch herausgerechnet werden kann, dass er bei der 9 Uhr-Stellung und der 3 Uhr-Stellung entgegengesetzt auftritt. Er hat also insoweit einen systematischen Einfluss, dass er besonders bei den beiden exemplarisch genannten Stellungen von 9 Uhr und 3 Uhr immer der Gewichtskraft entgegenwirkt.

Außerdem oder alternativ wird vorgeschlagen, dass der Korrekturanteil in Abhängigkeit vom Blattwinkel des Rotorblattes bestimmt wird. Hier wurde besonders erkannt, dass dieser Blattwinkel einen signifikanten Einfluss auf die Verfälschung haben kann und somit durch den Korrekturanteil berücksichtigt werden kann. Auch für die Simulation oder die Vergleichsmessungen kann ein solcher Blattwinkel berücksichtigt werden und er kann besonders als Randbedingung mitberücksichtigt und in einer Tabelle abgespeichert werden.

Gemäß einem Aspekt wird vorgeschlagen, dass das Aufnehmen eines Sensorwertes im Erfassungsschritt und das Berechnen des Umrechnungsfaktors aus einem Zusammenhang zwischen dem erfassten Sensorwert und der Vergleichskraft bei gleicher Windgeschwindigkeit und/oder gleicher Rotordrehzahl und/oder gleichem Rotorblattwinkel wiederholt wird. Dazu wird auch vorgeschlagen, dass aus den einzelnen Umrechnungsfaktoren, die bei jeder Wiederholung berechnet werden, ein gesamter Umrechnungsfaktor bestimmt wird, insbesondere als Mittelwert der einzelnen Umrechnungsfaktoren.

Hier wurde besonders erkannt, dass bei gleicher Windgeschwindigkeit und/oder gleicher Rotordrehzahl von einem gleichen Korrekturanteil auszugehen ist. Besonders kann die Rotordrehzahl repräsentativ für eine Windgeschwindigkeit stehen, zumindest, solange die Windgeschwindigkeit unterhalb einer Nennwindgeschwindigkeit ist. Bei Windgeschwindigkeiten oberhalb der Nennwindgeschwindigkeit, insbesondere oberhalb einer Sturmwindgeschwindigkeit also bei Starkwind, kann die Windenergieanlage zur Kalibrierung in einen Kalibriermodus versetzt werden, in dem die Rotorblätter in der Schutzbetriebsstellung stehen, also in einer Stellung, die von der Fahnenstellung um maximal 30° abweicht, sodass sich der Rotor durch den Wind nur wenig dreht. Auch in einer solchen Stellung bzw. Situation kann die Rotordrehzahl als proportional zur Windgeschwindigkeit angenommen werden.

Insoweit deutet die gleiche Rotordrehzahl auf gleiche Windbedingungen hin.

Ist also aufgrund der Indikatoren von gleicher Windgeschwindigkeit auszugehen, oder weil gleiche Windgeschwindigkeit erfasst wurde, kann von einem gleichen Korrekturanteil ausgegangen werden, sodass bei gleichen Bedingungen wiederholt ein Umrechnungsfaktor bestimmt werden kann und ein gesamter Umrechnungsfaktor aus diesen bestimmt werden kann, insbesondere durch Mittelwertbildung. Dadurch kann die Genauigkeit eines so bestimmten gesamten Umrechnungsfaktors erhöht werden. Statt oder ergänzend zu einer Mittelwertbildung kommt beispielsweise auch in Betracht, bei vielen berechneten Umrechnungsfaktoren einen oder mehrere herauszustreichen, die eine zu starke Abweichung von den übrigen haben.

Gemäß einem Aspekt wird vorgeschlagen, dass

- das Aufnehmen eines Sensorwertes im Erfassungsschritt und das Berechnen des Umrechnungsfaktors aus einem Zusammenhang zwischen dem erfassten Sensorwert und der Vergleichskraft in regelmäßigen Abständen wiederholt wird, insbesondere innerhalb von 1-7 Tagen, 1-4 Wochen und/oder 1-12 Monaten, und

- die jeweils berechneten Umrechnungsfaktoren abgespeichert werden, insbesondere zusammen mit jeweils zugehörigen Randbedingungen abgespeichert werden.

Solche Randbedingungen sind insbesondere die Windgeschwindigkeit und/oder die Rotordrehzahl.

Hier wurde besonders erkannt, dass sich die Umrechnungsfaktoren ändern können, und daher eine regelmäßige Wiederbestimmung und damit aktualisierte Kalibrierung vorteilhaft ist. Dadurch, dass das vorgeschlagene Verfahren auch eine gute Bestimmung des Umrechnungsfaktors bei hohen Windgeschwindigkeiten ermöglicht, kann eine solche regelmäßige Wiederholung durchgeführt werden. Es ist nicht erforderlich, erst eine geringe Windgeschwindigkeit abzuwarten.

Ganz generell wurde erkannt, dass die Windenergieanlage grundsätzlich direkt nach ihrem Aufbau kalibriert werden sollte, also unabhängig von den aktuellen Windverhältnissen. Das wird durch das vorgeschlagene Verfahren ermöglicht.

Außerdem wurde erkannt, dass beim Material, nämlich beim Rotorblatt als auch beim Lastsensor, ein Temperatureinfluss auftreten kann, oder sich anderweitig Veränderungen einstellen können, z.B. durch Ermüdung. Die Materialeigenschaften können sich daher kontinuierlich ändern. Eine häufige Kalibrierung führt dazu, dass die Sensorwerte wieder richtig ermittelt werden können. Eine solche häufige Kalibrierung wird daher vorgeschlagen und dadurch auch ermöglicht, dass der Umrechnungsfaktor auch bei hohen Windgeschwindigkeiten bestimmt werden kann.

Eine Abspeicherung der Umrechnungsfaktoren ist im Grunde nicht nötig, da jeweils nur der aktuelle Umrechnungsfaktor benötigt wird. Es wurde aber erkannt, dass durch das Abspeichern der Umrechnungsfaktoren ermöglicht wird, mehrere, zu unterschiedlichen Zeiten und/oder bei unterschiedlichen Randbedingungen aufgenommene Umrechnungsfaktoren zu vergleichen, insbesondere um dadurch Fehler und/oder Materialveränderungen des jeweiligen Lastsensors und/oder Rotorblattes zu erkennen.

Gemäß einem Aspekt wird vorgeschlagen, dass die Rotordrehzahl quadratisch in den Korrekturanteil eingeht, insbesondere zusammen mit einem Wichtungsfaktor.

Außerdem oder alternativ wird vorgeschlagen, die Kalibrierung ohne Generatormoment durchzuführen. Der Generator wird also nicht angesteuert.

Es liegt die Erkenntnis zugrunde, dass der Korrekturanteil, eine aus dem Wind auf das Rotorblatt wirkende aerodynamische Kraft herausrechnet. Diese aerodynamische Kraft kann quadratisch von der Windgeschwindigkeit abhängen und die Rotordrehzahl kann proportional zur Windgeschwindigkeit sein. Das ist besonders dann der Fall, wenn kein Generatormoment anliegt, der Generator also im Leerlauf ist. Dann kann der Korrekturanteil als quadratisch zur Rotordrehzahl angenommen werden. Das gilt besonders in einem Teillastbetrieb, in dem eine konstante Schnelllaufzahl angenommen wird, aus der sich somit die Proportionalität zwischen Rotordrehzahl und Windgeschwindigkeit ergibt. Es gilt aber auch in dem Kalibriermodus, in dem bei hohen Windgeschwindigkeiten, besonders bei Starkwind, die Rotorblätter in der Schutzbetriebsstellung stehen, also in einer Stellung, die von der Fahnenstellung um maximal 30° abweicht, sodass sich der Rotor durch den Wind nur wenig dreht. Auch hier ist von einer Rotordrehzahl proportional zur Windgeschwindigkeit auszugehen.

Gemäß einem Aspekt wird vorgeschlagen, dass

-   der Korrekturanteil als additiver Korrekturwert bestimmt wird, sodass der Umrechnungsfaktor aus einer Summe aus der Gewichtskraft und dem Korrekturanteil berechnet wird, insbesondere so, dass der Umrechnungsfaktor U berechnet wird nach der Gleichung

$$U=S/(G-W_1*n^2)$$

mit

S: Sensorwert,
G: auf das Rotorblatt wirkende Gewichtskraft
$W_1$: erster Wichtungsfaktor für additiven Korrekturwert und
n: Rotordrehzahl oder Windgeschwindigkeit, wobei

-   der Term $W_1*n^2$ den additiven Korrekturwert wiedergibt und der Term $(G-W_1*n^2)$ die Vergleichskraft wiedergibt.

Alternativ wird vorgeschlagen, dass

-   der Korrekturanteil als multiplikativer Korrekturwert bestimmt wird, sodass der Umrechnungsfaktor aus einem Produkt aus der Gewichtskraft und dem Korrekturanteil berechnet wird, insbesondere so, dass der Umrechnungsfaktor U berechnet wird nach der Gleichung

$$U=S/(G*(1-W_2*n^2))$$

mit

S: Sensorwert,

G: auf das Rotorblatt wirkende Gewichtskraft

$W_2$: zweiter Wichtungsfaktor für multiplikativen Korrekturwert und

n: Rotordrehzahl oder Windgeschwindigkeit, wobei

- der Term $(1-W_2*n^2)$ den multiplikativen Korrekturwert wiedergibt und der Term $G*(1-W_2*n^2)$ die Vergleichskraft wiedergibt.

Hier wurde erkannt, dass der Korrekturanteil als additiver Korrekturwert oder als multiplikativer Korrekturwert bestimmt werden kann und dann auch entsprechend angewendet werden kann. Für beide Varianten wird eine konkrete Formel vorgeschlagen. Darin geht in beiden Fällen die Rotordrehzahl quadratisch in den Korrekturwert ein, sowohl in den additiven als auch den multiplikativen Korrekturwert. Auch hier liegt der Gedanke zugrunde, dass die Windgeschwindigkeit quadratisch in die Kraft eingeht, die der Korrekturwert korrigieren will. Auch hier wird von einer Proportionalität zwischen Drehzahl und Windgeschwindigkeit ausgegangen. Insoweit wird auch hier vorzugsweise das Verfahren in einem Teillastbetrieb oder Kalibriermodus durchgeführt.

Die Verwendung dieser Berechnung, bei der die Drehzahl quadratisch in den Korrekturwert eingeht, ist somit nicht auf das Durchführen des Verfahrens im Teillastbetrieb beschränkt.

Es kann auch besonders dann Anwendung finden, wenn bei sehr hohen Windgeschwindigkeiten die Rotordrehzahl nur noch gering ist, weil die Rotorblätter eine Fahnenstellung oder der Fahnenstellung ähnliche Stellung hinsichtlich ihrer Rotorblattwinkel eingenommen haben. Auch dann kann die resultierende geringe Rotordrehzahl ungefähr proportional zur Windgeschwindigkeit sein.

Anstelle der Drehzahl kann eine erfasste oder geschätzte Windgeschwindigkeit verwendet werden. In den Formeln würde dann für die Variable n statt der Rotordrehzahl die Windgeschwindigkeit eingesetzt. Es kann auch für die Windgeschwindigkeit die Variable $v_W$ verwendet und anstelle der Variablen n eingesetzt werden. Die angepassten Formeln lauten dann statt $U=S/(G-W_1*n^2)$ bzw. $U=S/(G*(1-W_2*n^2))$ mit $v_W$ für n eingesetzt $U=S/(G-W_1*v_W^2)$ bzw. $U=S/(G*(1-W_2*v_W^2))$. Natürlich werden sich dann für die Wichtungsfaktoren andere Werte und auch Einheiten ergeben.

Erfindungsgemäß wird auch eine Windenergieanlage vorgeschlagen, die vorbereitet ist zum Durchführen eines Verfahrens zum Kalibrieren einer Messeinrichtung zur Lastmessung eines Rotorblattes der Windenergieanlage, wobei die Windenergieanlage einen Rotor mit einer Rotorachse und mehreren in ihrem Blattwinkel verstellbaren Rotorblättern aufweist, und das Verfahren ist dadurch gekennzeichnet, dass

- für jeweils ein Rotorblatt,

- zur Kalibrierung wenigstens ein Umrechnungsfaktor zum Umrechnen eines erfassten Sensorwertes eines Lastsensors in einen auf das Rotorblatt, insbesondere im Bereich ihrer Blattwurzel, wirkenden Lastwert bestimmt wird,

- in einem Erfassungsschritt durch den Lastsensor ein Sensorwert aufgenommen wird, und

- der Umrechnungsfaktor aus einem Zusammenhang zwischen in dem Erfassungsschritt erfasstem Sensorwert und dabei auf das Rotorblatt wirkender Vergleichskraft berechnet wird, wobei

- die Vergleichskraft in Abhängigkeit von einer auf das Rotorblatt wirkenden Gewichtskraft berechnet wird, und

- die Vergleichskraft zusätzlich in Abhängigkeit von einem Korrekturanteil bestimmt wird, der eine Abweichung zwischen Vergleichskraft und Gewichtskraft berücksichtigt.

Eine solche Windenergieanlage ist also dazu vorbereitet, ein Verfahren zum Kalibrieren auszuführen, wie vorstehend erläutert wurde. Besonders kann das Verfahren als Computerprogramm auf einem Prozessrechner implementiert sein.

Gemäß einem Aspekt wird vorgeschlagen, dass die Windenergieanlage eine Steuereinrichtung zum Steuern der Windenergieanlage aufweist und/oder die Windenergieanlage, insbesondere die Steuereinrichtung, dazu vorbereitet ist, ein Verfahren gemäß einem der vorstehend beschriebenen Aspekte auszuführen.

Eine solche Steuereinrichtung kann die Windenergieanlage steuern und dabei Tätigkeiten ausführen wie eine Leistung einzustellen, eine Azimutnachführung zu realisieren und gegebenenfalls die Rotorblattwinkel zu verstellen. Im Grunde ist eine solche Steuereinrichtung allgemein bekannt und in Windenergieanlagen grundsätzlich vorhanden. Eine solche Steuereinrichtung ist hier auch vorgesehen. Sie kann den genannten Prozessrechner beinhalten oder der Prozessrechner kann die Steuereinrichtung bilden.

Die Windenergieanlage ist dazu vorbereitet, das Kalibrierverfahren umzusetzen. Dazu kann das entsprechende Verfahren insbesondere auf der Windenergieanlage implementiert sein und es kann dabei insbesondere in der Steuereinrichtung implementiert sein. Insoweit unterscheidet sich die Steuereinrichtung dann von herkömmlichen Steuereinrichtungen durch das implementierte Verfahren. Insbesondere kann die Steuereinrichtung Werte von den Lastsensoren erhalten und kann Berechnungsvorschriften zum Berechnen einer Gewichtskraft umsetzen. Dazu kann sie entsprechende Daten des Rotorblattes erhalten oder bei Inbetriebnahme bereits als feste Daten erhalten haben. Zur Berechnung des Umrechnungsfaktors kann dann die Blattposition im Sinne der Rotorstellung berücksichtigt werden und optional auch der Rotorblattwinkel des betreffenden Rotorblattes.

Basierend auf diesen Werten kann dann das Verfahren in der Steuereinrichtung umgesetzt werden. Die Steuereinrichtung kann aber auch als Steuereinrichtung aus örtlich über die Windenergieanlage verteilten Elementen, also Teilsteuereinheiten, aufgebaut sein.

Die Erfindung wird nachfolgend exemplarisch unter Bezugnahme auf die begleitenden Figuren näher erläutert.

Figur 1                zeigt eine Windenergieanlage in einer perspektivischen Darstellung.

Figuren 2A und 2B      zeigen schematisch zwei Rotorstellungen zur Kalibrierung einer Messeinrichtung zur Lastmessung.

Figur 3                zeigt schematisch eine Windenergieanlage zur Erläuterung einer Achsneigung.

Figuren 4A und 4B      zeigen schematisch einen Teil einer Windenergieanlage zur Veranschaulichung unterschiedlicher aerodynamischer Kräfte auf ein Rotorblatt in Abhängigkeit von einer Achsneigung.

Figur 5                zeigt schematisch eine Messeinrichtung zur Lastmessung eines Rotorblattes

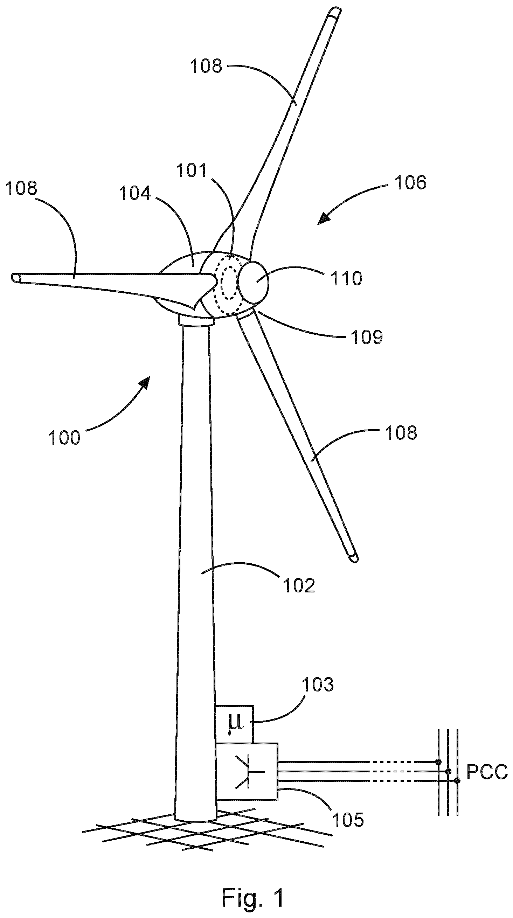

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. Die Anlagensteuerung 103 ist ein Beispiel für eine Steuereinrichtung zum Steuern der Windenergieanlage.

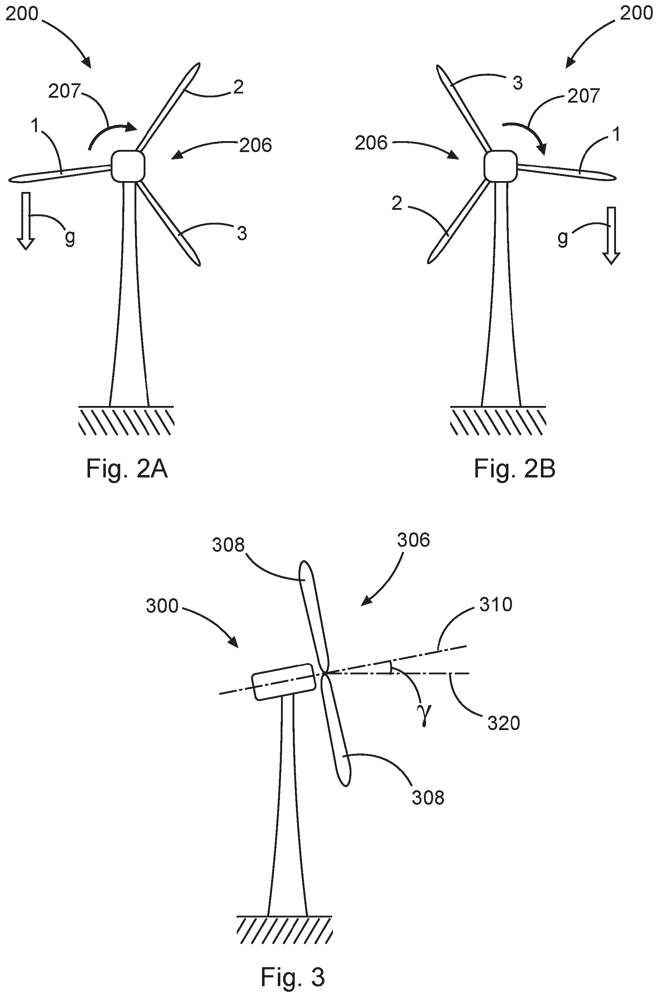

**Figuren 2A und 2B** zeigen schematisch eine Windenergieanlage 200 mit drei Rotorblättern 1, 2 und 3. Zur Erläuterung wird hier das Rotorblatt 1 betrachtet. Bezogen auf dieses Rotorblatt 1 hat der Rotor 200 in Figuren 2A eine 9 Uhr-Position und in Figur 2B eine 3 Uhr-Position. Entsprechend ist die Gravitation bzw. Erdbeschleunigung g angedeutet, wie sie auf dieses Rotorblatt 1 wirkt. Die Figuren zeigen ebenfalls eine Drehrichtung 207 des Rotors 206. Daraus wird deutlich, dass bei der 9 Uhr-Position der Figur 2A die Gravitation bzw. Erdbeschleunigung g der Drehrichtung 207 entgegenwirkt. Andererseits wirkt die Gravitation bzw. Erdbeschleunigung g in dieselbe Richtung wie die Drehrichtung 207, wenn das Rotorblatt 1 in der 3 Uhr-Position ist, wie Figur 2B zeigt.

Daraus wird erkennbar, dass Kräfte, die immer in Drehrichtung wirken, dadurch herausgerechnet werden können, dass sie in der 9 Uhr-Position der Gravitation bzw. Erdbeschleunigung entgegenwirken und in der 3 Uhr-Position diese verstärken. Durch solche unterschiedlichen Richtungen können sie herausgerechnet werden, wenn entsprechende Vergleichsmessungen in der 9 Uhr-Position und der 3 Uhr-Position aufgenommen werden. Es wurde aber erkannt, dass auch aerodynamische Kräfte auftreten können, die in beiden Positionen der Gravitation bzw. Erdbeschleunigung entgegenwirken, oder sie gegebenenfalls in beiden Fällen verstärken können. Solche Kräfte sollen ermittelt und herausgerechnet werden.

Solche Kräfte treten besonders aufgrund einer Achsneigung der Rotorachse auf, die heutzutage aufgrund leichterer Bauweise der Rotorblätter und auch immer länger werdenden Rotorblättern im Vergleich zu früher größer geworden ist. Eine solche Achsneigung mit einem Neigungswinkel $\gamma$ zeigt die **Figur 3.**

Dazu ist in Figur 3 eine Windenergieanlage 300 mit einem Rotor 306 mit Rotorblättern 308 schematisch dargestellt. Auch die Windenergieanlage 300 soll drei Rotorblätter 308 haben, was nur in der schematischen Darstellung der Figur 3 nicht genau zu erkennen ist.

Jedenfalls weist die Windenergieanlage 300 bzw. ihr Rotor 306 eine Rotorachse 310 auf, und diese ist gegenüber einer Horizontalen 320 um den Neigungswinkel $\gamma$ geneigt.

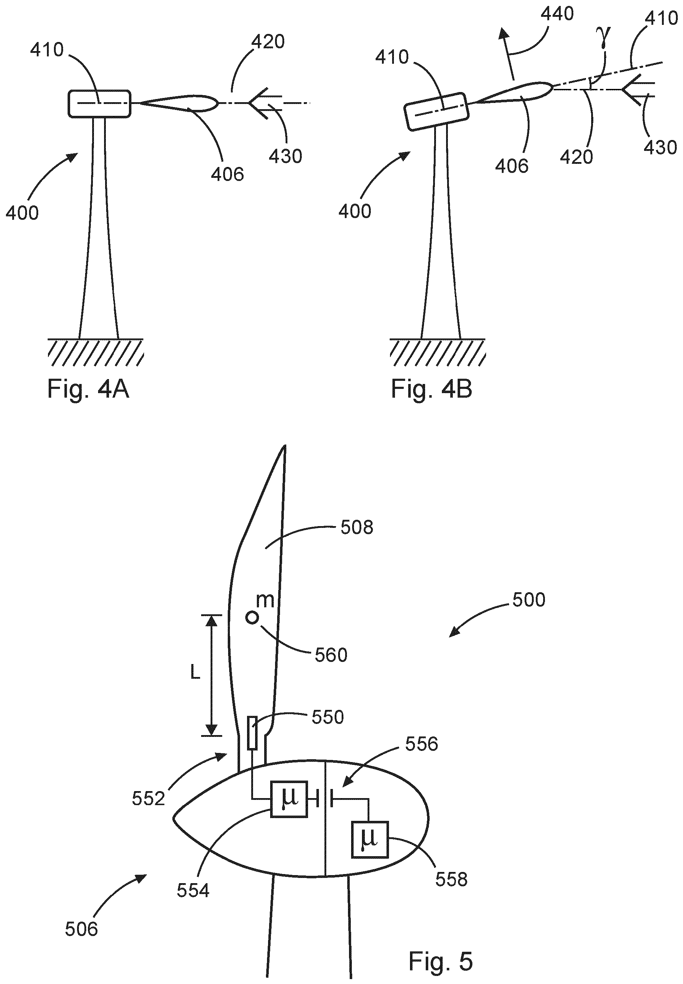

Resultierende Effekte aus dem Neigungswinkel sollen in den **Figuren 4A und 4B** erläutert werden. Beide Figuren zeigen dazu eine schematische Darstellung einer Windenergieanlage 400, von der nur ein Rotorblatt 406 zur Veranschaulichung dargestellt ist. Zur besseren Vergleichbarkeit werden in den Figuren 4A und 4B dieselben Bezugszeichen verwendet, obwohl sich beide Windenergieanlagen 400 zwischen den Figuren 4A und 4B in einem Neigungswinkel $\gamma$ unterscheiden.

Die Windenergieanlage 400 in Figur 4A weist keinen Neigungswinkel auf und soll insoweit als Vergleichswindenergieanlage dienen. Wind strömt hier mit einer Windrichtung 430 waagerecht an, also parallel zu einer Horizontalen 420. Die Rotorachse 410 verläuft ebenfalls waagerecht, sodass der waagerecht anströmende Wind mit der Windrichtung 430 zu keinem zusätzlichen Auftrieb auf das Rotorblatt 406 führt.

Gemäß Figur 4B weist die Rotorachse 410 aber einen Neigungswinkel $\gamma$ gegenüber der Horizontalen 420 auf. Hier strömt der Wind mit derselben Windrichtung 430 auf das Rotorblatt, was aufgrund des Neigungswinkels $\gamma$ der Rotorachse 410 aber zu einem Auftrieb 440 das Rotorblatt führt. Dieser Auftrieb ist in jedem Fall nach oben gerichtet, unabhängig davon, ob der Rotor bezogen auf das betreffende Rotorblatt in einer 9 Uhr-Position oder 3 Uhr-Position steht.

**Figur 5** veranschaulicht eine Windenergieanlage 500 mit einem Rotor 506 mit Rotorblättern 508, von denen in Figur 5 aber nur eines dargestellt ist. Alle übrigen Rotorblätter sind aber wie das in Figur 5 dargestellte aufgebaut.

Zur Erfassung von Lasten ist ein Lastsensor 550 vorgesehen, der in einem Bereich der Blattwurzel 552 angeordnet ist. Der Lastsensor 550 kann als Dehnungsmessstreifen ausgebildet sein, um nur ein Beispiel zu nennen. Andere Beispiele wurden oben bereits erwähnt. Der Lastsensor erfasst eine Dehnung des Rotorblattes 508 in dem Bereich, in dem er angeordnet ist. Dazu gibt der Lastsensor jeweils einen Sensorwert an den Sensorprozessor 554, der über einen Übertrager 556, der als Schleifringübertrager ausgebildet sein kann, an eine Recheneinheit 558. In der Recheneinheit 558 kann der Umrechnungsfaktor implementiert sein, um aus dem Sensorwert eine Blattlast zu bestimmen. Die Blattlast ist somit ein Lastwert, der mithilfe des Lastsensors und des Umrechnungsfaktors bestimmt wurde. Der Lastsensor 550 mit dem Sensorprozessor 554 und der Recheneinheit 558 können die Messeinrichtung zur Lastmessung des Rotorblattes bilden. Der Übertrager 556 kann als Teil der Messeinrichtung angesehen werden. Die Recheneinheit 558 kann Teil einer Steuerungseinrichtung sein.

Zur Kalibrierung kann eine Vergleichskraft aus einer Gewichtskraft bestimmt werden. Durch die Erdbeschleunigung g wirkt im Bereich des Lastsensors 550 ein Blattwurzelbiegemoment, das sich als m * g * L berechnen lässt, wenn sich der Rotor bezogen auf das betreffende Rotorblatt in einer 9 Uhr-Position befindet. Dasselbe Blattwurzelbiegemoment, aber mit negativem Vorzeichen, ergibt sich bei einer 3 Uhr-Position. Dabei bezeichnet g die Erdbeschleunigung, m die Masse des Rotorblattes und L den Abstand von der Position des Lastsensors 550 zu dem Gewichtsschwerpunkt 560.

Die vorliegende Erfindung, die auch unter Bezugnahme auf die obigen Figuren exemplarisch erläutert wurde, kompensiert zumindest teilweise Kalibrierfehler in Situationen, in denen typische aerodynamische Kräfte aus Starkwindsituationen auftreten. Die Erfindung betrifft somit die Kalibrierung von Lastmessungen an Windenergieanlagen und sie ermöglicht die Kalibrierung außerhalb von Windstille bzw. verbessert die Genauigkeit bei Starkwind.

Bei der Berücksichtigung des hierbei auftretenden Einflusses durch aerodynamische Kräfte wird vorgeschlagen zu berücksichtigen, dass aerodynamische Kräfte quadratisch mit der Windgeschwindigkeit ansteigen können. Es wird auch vorgeschlagen zu berücksichtigen, dass sich bei konstantem Blattwinkel und ohne Gegenmoment eine Rotordrehzahl proportional zur Windgeschwindigkeit einstellt.

Die Messung des Blattwurzelbiegemoments wird üblicherweise kalibriert in Situationen, in denen das Rotorblatt seitlich von der Anlage weg zeigt, wie Figuren 2A und 2B veranschaulichen.

Dabei kommen als Rotorstellung, in Bezug auf ein zu kalibrierendes Rotorblatt, folgende bevorzugte Stellungen oder Möglichkeiten in Betracht:

- die "9 Uhr-Position", in der das Blattwurzelbiegemoment als +m*g*L berechnet werden kann,
- die "3 Uhr-Position", in der das Blattwurzelbiegemoment als -m*g*L berechnet werden kann,
- weitere Rotorstellungen, in denen das Blattwurzelbiegemoment als m*g*L*sin($\beta$) berechnet werden kann, wenn $\beta$ der Rotorwinkel für das betreffende Rotorblatt ist,
- eine Kombination mehrerer Rotorstellungen, bis hin zu einem Integral aller Werte über einen oder mehrere Rotorumläufe, in denen besonders ein Integral über die absoluten Werte von m*g*L*sin($\beta$) über den Rotorwinkel gebildet wird.

Insbesondere zur Auswertung mehrerer Rotorstellungen bietet es sich an, die Kalibrierung nicht bei stehendem Rotor auszuführen, sondern bei drehendem Rotor. Dazu sollen die die Blattwinkel nicht exakt in Fahnenstellung sein, sondern in einem leicht reingepitchten Zustand, im Bereich von bis zu 20°, insbesondere bis zu 10°. Die in Schlagrichtung wirkenden Blattwurzelbiegemomente verringern sich dann um den Faktor sin($\alpha$), wenn $\alpha$ den Blattwinkel bezeichnet, der auch als Pitchwinkel bezeichnet werden kann. Der Blattwinkel bzw. dieser Zusammenhang kann in der Auswertungsrechnung berücksichtigt werden.

Bisher wurde der Einfluss der Aerodynamik ignoriert bzw. oberhalb einer Windgeschwindigkeitsschwelle auf eine Kalibrierung verzichtet.

Es wird nun vorgeschlagen, dass aerodynamische Einflüsse während des Abgleichvorgangs möglichst gut korrigiert werden.

Es wurde erkannt, dass in den vergangenen Jahren die Rotorblätter von neuen Anlagentypen durch Materialeinsparungen leichter wurden, d. h., dass sich das Verhältnis von Gewichtskräften und aerodynamischen Kräften tendenziell zu aerodynamischen Kräften verlagert hat. Der somit zugenommene Einfluss aerodynamischer Kräfte kann durch das vorgeschlagene Verfahren berücksichtigt werden.

Weiterhin wurde erkannt, dass eine abnehmende Rotorblattsteifigkeit zu verzeichnen ist, die zu größeren Tilt-Winkeln der Gondel, also größeren Achsneigungen der Rotorachse, geführt hat, um einen ausreichenden Turmfreigang der Rotorblätter zu ermöglichen. Das ist in Figur 3 veranschaulicht.

Es wurde erkannt, dass der Tilt-Winkel, der also synonym als Neigungswinkel der Rotorachse bezeichnet werden kann, dazu führt, dass eine Anströmung von vorne zu Auftriebskräften führt, wie man im Vergleich zwischen den Figuren 4A und 4B sieht, in denen jeweils ein Profilschnitt eines Rotorblattes in Fahnenstellung dargestellt ist, welches seitlich von der Windenergieanlage weg zeigt.

Dieser Effekt tritt gleichermaßen in der "9 Uhr-Position" und der "3 Uhr-Position" auf und wirkt in beiden Fällen nach oben, d. h. entgegen der Gewichtskraftrichtung. Der Tilt-Winkel, also die Achsneigung, führt also, bei gleichzeitiger Frontalanströmung, dazu, dass ein Teil des Blattgewichts durch den Auftrieb kompensiert wird und nicht mehr zum Blattwurzelbiegemoment beiträgt und daher auch nicht an der blattwurzelnahen Messstelle erfasst werden kann. Ein Abgleichverfahren kann dies als unsensitive Messstelle interpretieren und einen höheren Verstärkungsfaktor bestimmen, mit dem dann spätere Messwerte multipliziert werden.

Es wurde erkannt, dass die Stärke der Auftriebskraft und des vorab beschriebenen Effekts auf den Verstärkungsfaktor quadratisch mit der Anströmgeschwindigkeit zunimmt.

Da die Anströmgeschwindigkeit nur punktuell gemessen wird, bietet es sich an, die Rotordrehgeschwindigkeit als Indikator für die mittlere Anströmgeschwindigkeit zu verwenden. Da bei einem Abgleich ohne Generatormoment und mit konstantem Pitchwinkel sich stets die gleiche Schnelllaufzahl einstellt, wird der beschriebene Effekt auch quadratisch mit der Rotordrehzahl zunehmen. Daher wird vorgeschlagen, eine Korrektur vorzunehmen, die aus der quadrierten Rotordrehzahl und einem Wichtungsfaktor berechnet wird. Der Wichtungsfaktor kann experimentell oder mittels Simulationen ermittelt werden. Anstelle der Rotordrehzahl kann aber auch die Windgeschwindigkeitsmessung selbst verwendet werden, es wird dann also die Windgeschwindigkeit statt der Rotordrehzahl zum Berechnen verwendet.

Denkbar erscheinen zweierlei Modellierungswege. Entweder kann ein additiver Fehler modelliert werden, bei dem der Zusammenhang

$$\text{Messwert} = \text{Messverstärkung} \times (\text{Gewichtskraft} - \text{Aerodynamische Auftriebskraft})$$

$$= \text{Messverstärkung} \times (\text{Gewichtskraft} - \text{Wichtungsfaktor} \times \text{Drehzahl}^2)$$

angenommen wird, und die Berechnung der Messverstärkung dann gemäß der Formel

$$\text{Messverstärkung} = \text{Messwert} \div (\text{Gewichtskraft} - \text{Wichtungsfaktor} \times \text{Drehzahl}^2)$$

erfolgt. Der Messwert kann synonym als Sensorwert bezeichnet werden. Die Messverstärkung kann synonym als Umrechnungsfaktor bezeichnet werden. Diese vorige Formel kann somit auch als $U = S/(G - W_1 * n^2)$ geschrieben werden.

Ebenso kann ein multiplikativer Fehler modelliert werden,

$$\text{Messwert} = \text{Messverstärkung} \times \text{Gewichtskraft} \times (1 - \text{Wichtungsfaktor} \times \text{Drehzahl}^2),$$

wobei die Korrektur dann über die Formel

$$\text{Messverstärkung} = \text{Messwert} \div \text{Gewichtskraft} \div (1 - \text{Wichtungsfaktor} \times \text{Drehzahl}^2).$$

erfolgt. Auch hier gilt, dass der Messwert synonym als Sensorwert bezeichnet werden kann und die Messverstärkung synonym als Umrechnungsfaktor bezeichnet werden kann. Diese vorige Formel kann somit auch als $U = S/(G * (1 - W_2 * n^2))$

geschrieben werden.

**Patentansprüche**

1. Verfahren zum Kalibrieren einer Messeinrichtung zur Lastmessung eines Rotorblattes einer Windenergieanlage, wobei die Windenergieanlage einen Rotor mit einer Rotorachse und mehreren in ihrem Blattwinkel verstellbaren Rotorblättern aufweist, und

   - für jeweils ein Rotorblatt,
   - zur Kalibrierung wenigstens ein Umrechnungsfaktor zum Umrechnen eines erfassten Sensorwertes eines Lastsensors in einen auf das Rotorblatt, insbesondere im Bereich ihrer Blattwurzel, wirkenden Lastwert bestimmt wird,
   - in einem Erfassungsschritt durch den Lastsensor ein Sensorwert aufgenommen wird, und
   - der Umrechnungsfaktor aus einem Zusammenhang zwischen in dem Erfassungsschritt erfasstem Sensorwert und dabei auf das Rotorblatt wirkender Vergleichskraft berechnet wird, wobei
   - die Vergleichskraft in Abhängigkeit von einer auf das Rotorblatt wirkenden Gewichtskraft berechnet wird, und
   - die Vergleichskraft zusätzlich in Abhängigkeit von einem Korrekturanteil bestimmt wird, der eine Abweichung zwischen Vergleichskraft und Gewichtskraft berücksichtigt.

2. Verfahren nach Anspruch 1, **dadurch gekennzeichnet, dass**

   - der Korrekturanteil

      - in Abhängigkeit von einer aerodynamischen Kraft auf das Rotorblatt bestimmt wird und/oder
      - in Abhängigkeit von einer Achsneigung der Rotorachse bestimmt wird, insbesondere, dass

   - der Korrekturanteil in Abhängigkeit von einer aerodynamischen, aufwärtsgerichteten Kraft berücksichtigt wird, die aufgrund der Achsneigung des Rotors aus Wind auf das Rotorblatt wirkt.

3. Verfahren nach Anspruch 1 oder 2, **dadurch gekennzeichnet, dass**

   - das Kalibrieren vollständig oder teilweise im laufenden Betrieb der Windenergieanlage durchgeführt wird, und/oder in einem Schutzbetrieb durchgeführt wird, in dem die Rotorblätter in einer Schutzbetriebsstellung stehen, die um maximal 30° von einer Fahnenstellung abweicht, und insbesondere, dass
   - der Erfassungsschritt im laufenden Betrieb oder im Schutzbetrieb der Windenergieanlage durchgeführt wird.

4. Verfahren nach einem der vorstehenden Ansprüche, **dadurch gekennzeichnet, dass**

   - das Kalibrieren, insbesondere der Erfassungsschritt, zumindest teilweise bei hohen Windgeschwindigkeiten, oberhalb einer Nennwindgeschwindigkeit, insbesondere oberhalb einer Sturmwindgeschwindigkeit, bei der ein Anlagenbetrieb zum Schutz der Windenergieanlage reduziert wird, durchgeführt wird und/oder
   - das Kalibrieren, insbesondere der Erfassungsschritt, zumindest teilweise bei einer etwa waagerechten Position des Rotorblattes bzw. etwa bei einer 9 Uhr- oder 3 Uhr-Stellung des Rotors bezogen auf das Rotorblatt durchgeführt wird.

5. Verfahren nach einem der vorstehenden Ansprüche, **dadurch gekennzeichnet, dass**

   - der Korrekturanteil durch eine Simulation und/oder durch Vergleichsmessungen bestimmt wird und/oder dass
   - der Korrekturanteil einen die Wirkung der Gewichtskraft auf das Rotorblatt verändernden systematischen Einfluss berücksichtigt, insbesondere herausrechnet, und/oder dass
   - der Korrekturanteil in Abhängigkeit vom Blattwinkel des Rotorblattes bestimmt wird.

6. Verfahren nach einem der vorstehenden Ansprüche, **dadurch gekennzeichnet, dass**

   - das Aufnehmen eines Sensorwertes im Erfassungsschritt und das Berechnen des Umrechnungsfaktors aus einem Zusammenhang zwischen dem erfassten Sensorwert und der Vergleichskraft bei gleicher Windgeschwindigkeit und/oder gleicher Rotordrehzahl und/oder gleichem Rotorblattwinkel wiederholt wird, und

- aus den einzelnen Umrechnungsfaktoren, die bei jeder Wiederholung berechnet werden, ein gesamter Umrechnungsfaktor bestimmt wird, insbesondere als Mittelwert der einzelnen Umrechnungsfaktoren.

7. Verfahren nach einem der vorstehenden Ansprüche, **dadurch gekennzeichnet, dass**

   - das Aufnehmen eines Sensorwertes im Erfassungsschritt und das Berechnen des Umrechnungsfaktors aus einem Zusammenhang zwischen dem erfassten Sensorwert und der Vergleichskraft in regelmäßigen Abständen wiederholt wird, insbesondere innerhalb von 1-7 Tagen, 1-4 Wochen und/oder 1-12 Monaten, und
   - die jeweils berechneten Umrechnungsfaktoren abgespeichert werden, insbesondere zusammen mit jeweils zugehörigen Randbedingungen abgespeichert werden.

8. Verfahren nach einem der vorstehenden Ansprüche, **dadurch gekennzeichnet, dass**

   - die Rotordrehzahl quadratisch in den Korrekturanteil eingeht, insbesondere zusammen mit einem Wichtungsfaktor, und/oder
   - die Kalibrierung ohne Generatormoment durchgeführt wird.

9. Verfahren nach einem der vorstehenden Ansprüche, **dadurch gekennzeichnet, dass**

   - der Korrekturanteil als additiver Korrekturwert bestimmt wird, sodass der Umrechnungsfaktor aus einer Summe aus der Gewichtskraft und dem Korrekturanteil berechnet wird, insbesondere so, dass der Umrechnungsfaktor U berechnet wird nach der Gleichung

$$U = S/(G - W_1 * n^2)$$

   mit

   S: Sensorwert,
   G: auf das Rotorblatt wirkende Gewichtskraft
   $W_1$: erster Wichtungsfaktor für additiven Korrekturwert und
   n: Rotordrehzahl oder Windgeschwindigkeit, wobei

   - der Term $W_1 * n^2$ den additiven Korrekturwert wiedergibt und der Term $(G - W_1 * n^2)$ die Vergleichskraft wiedergibt, oder, dass
   - der Korrekturanteil als multiplikativer Korrekturwert bestimmt wird, sodass der Umrechnungsfaktor aus einem Produkt aus der Gewichtskraft und dem Korrekturanteil berechnet wird, insbesondere so, dass der Umrechnungsfaktor U berechnet wird nach der Gleichung

$$U = S/(G * (1 - W_2 * n^2))$$

   mit

   S: Sensorwert,
   G: auf das Rotorblatt wirkende Gewichtskraft
   $W_2$: zweiter Wichtungsfaktor für multiplikativen Korrekturwert und
   n: Rotordrehzahl oder Windgeschwindigkeit, wobei

   - der Term $(1 - W_2 * n^2)$ den multiplikativen Korrekturwert wiedergibt und der Term $G * (1 - W_2 * n^2)$ die Vergleichskraft wiedergibt.

10. Windenergieanlage vorbereitet zum Durchführen eines Verfahrens zum Kalibrieren einer Messeinrichtung zur Lastmessung eines Rotorblattes der Windenergieanlage, wobei die Windenergieanlage einen Rotor mit einer Rotorachse und mehreren in ihrem Blattwinkel verstellbaren Rotorblättern aufweist, und das Verfahren ist **dadurch gekennzeichnet, dass**

    - für jeweils ein Rotorblatt,
    - zur Kalibrierung wenigstens ein Umrechnungsfaktor zum Umrechnen eines erfassten Sensorwertes eines Lastsensors in einen auf das Rotorblatt, insbesondere im Bereich ihrer Blattwurzel, wirkenden Lastwert bestimmt wird,

- in einem Erfassungsschritt durch den Lastsensor ein Sensorwert aufgenommen wird, und
- der Umrechnungsfaktor aus einem Zusammenhang zwischen in dem Erfassungsschritt erfasstem Sensorwert und dabei auf das Rotorblatt wirkender Vergleichskraft berechnet wird, wobei
- die Vergleichskraft in Abhängigkeit von einer auf das Rotorblatt wirkenden Gewichtskraft berechnet wird, und
- die Vergleichskraft zusätzlich in Abhängigkeit von einem Korrekturanteil bestimmt wird, der eine Abweichung zwischen Vergleichskraft und Gewichtskraft berücksichtigt.

11.  Windenergieanlage nach Anspruch 10, **dadurch gekennzeichnet, dass**

- die Windenergieanlage eine Steuereinrichtung zum Steuern der Windenergieanlage aufweist, und/oder
- die Windenergieanlage, insbesondere die Steuereinrichtung, dazu vorbereitet ist, ein Verfahren nach einem der Ansprüche 1 bis 9 auszuführen.

Fig. 1

Fig. 2A

Fig. 2B

Fig. 3

Fig. 4A

Fig. 4B

Fig. 5

Europäisches
Patentamt

European
Patent Office

Office européen
des brevets

# EUROPÄISCHER RECHERCHENBERICHT

Nummer der Anmeldung

EP 24 16 9659

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 052565 A1 (WOBBEN ALOYS [DE]) 31. Mai 2012 (2012-05-31) | 1-4,6-11 | INV. |
| Y | * Absätze [0015] - [0026] * <br> * Absätze [0035] - [0046] * <br> * Abbildungen * <br> - - - - - | 5 | F03D17/00 |
| X | US 2012/292905 A1 (SLOT MARK OLAF [DK]) 22. November 2012 (2012-11-22) | 1-4,6-11 | |
| Y | * Absatz [0048] - Absatz [0183] * <br> * Abbildungen * <br> - - - - - | 5 | |
| X | US 2009/263246 A1 (BOLZ DETLEF [DE]) 22. Oktober 2009 (2009-10-22) <br> * Absätze [0037] - [0062] * <br> * Abbildungen * <br> - - - - - | 1-4,6-11 | |
| X | EP 3 141 746 B1 (MITSUBISHI HEAVY IND LTD [JP]) 23. Januar 2019 (2019-01-23) <br> * Absätze [0014] - [0108] * <br> * Abbildungen * <br> - - - - - | 1-4,6-11 | |
| A | EP 3 692 258 B1 (WOBBEN PROPERTIES GMBH [DE]) 28. Juli 2021 (2021-07-28) <br> * Zusammenfassung * <br> * Abbildungen * <br> - - - - - | 1-11 | **RECHERCHIERTE SACHGEBIETE (IPC)** <br><br> F03D |
| A | US 2013/183151 A1 (GARATE ALVARO JOSE MIGUEL [ES] ET AL) 18. Juli 2013 (2013-07-18) <br> * Zusammenfassung * <br> * Abbildungen * <br> - - - - - | 1-11 | |

Der vorliegende Recherchenbericht wurde für alle Patentansprüche erstellt

| Recherchenort | Abschlußdatum der Recherche | Prüfer |
|---|---|---|
| Den Haag | 3. September 2024 | Rini, Pietro |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

..............................................................................................

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 9659

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2024

| Im Recherchenbericht angeführtes Patentdokument | Datum der Veröffentlichung | Mitglied(er) der Patentfamilie | Datum der Veröffentlichung |
|---|---|---|---|
| DE 102010052565 A1 | 31-05-2012 | AR 083963 A1 | 10-04-2013 |
| | | AU 2011333723 A1 | 06-06-2013 |
| | | BR 112013012370 A2 | 30-08-2016 |
| | | CA 2817782 A1 | 31-05-2012 |
| | | CL 2013001486 A1 | 11-10-2013 |
| | | CN 103228911 A | 31-07-2013 |
| | | CY 1116241 T1 | 08-02-2017 |
| | | DE 102010052565 A1 | 31-05-2012 |
| | | DK 2547905 T3 | 27-04-2015 |
| | | EP 2547905 A1 | 23-01-2013 |
| | | ES 2536302 T3 | 22-05-2015 |
| | | HR P20150539 T1 | 19-06-2015 |
| | | JP 5913350 B2 | 27-04-2016 |
| | | JP 2014500931 A | 16-01-2014 |
| | | KR 20130097223 A | 02-09-2013 |
| | | NZ 610656 A | 31-07-2015 |
| | | PL 2547905 T3 | 31-08-2015 |
| | | PT 2547905 E | 19-05-2015 |
| | | RU 2013128762 A | 27-12-2014 |
| | | SI 2547905 T1 | 29-05-2015 |
| | | TW 201231805 A | 01-08-2012 |
| | | US 2013298634 A1 | 14-11-2013 |
| | | WO 2012069631 A1 | 31-05-2012 |
| US 2012292905 A1 | 22-11-2012 | CN 102713263 A | 03-10-2012 |
| | | DK 2531722 T3 | 25-11-2019 |
| | | EP 2354538 A1 | 10-08-2011 |
| | | EP 2531722 A1 | 12-12-2012 |
| | | ES 2757701 T3 | 29-04-2020 |
| | | US 2012292905 A1 | 22-11-2012 |
| | | WO 2011092032 A1 | 04-08-2011 |
| US 2009263246 A1 | 22-10-2009 | CA 2658068 A1 | 07-02-2008 |
| | | CN 101495747 A | 29-07-2009 |
| | | DE 102006036157 A1 | 07-02-2008 |
| | | DK 2047098 T3 | 19-08-2013 |
| | | EP 2047098 A2 | 15-04-2009 |
| | | ES 2411404 T3 | 05-07-2013 |
| | | US 2009263246 A1 | 22-10-2009 |
| | | WO 2008014935 A2 | 07-02-2008 |
| EP 3141746 B1 | 23-01-2019 | EP 3141746 A1 | 15-03-2017 |
| | | JP 6351557 B2 | 04-07-2018 |
| | | JP 2017053780 A | 16-03-2017 |
| | | US 2017074743 A1 | 16-03-2017 |

Für nähere Einzelheiten zu diesem Anhang : siehe Amtsblatt des Europäischen Patentamts, Nr.12/82

Seite 1 von 2

EPO FORM P0461

**EP 4 632 222 A1**

## ANHANG ZUM EUROPÄISCHEN RECHERCHENBERICHT
## ÜBER DIE EUROPÄISCHE PATENTANMELDUNG NR.

EP 24 16 9659

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2024

| Im Recherchenbericht angeführtes Patentdokument | Datum der Veröffentlichung | Mitglied(er) der Patentfamilie | Datum der Veröffentlichung |
|---|---|---|---|
| EP 3692258 B1 | 28-07-2021 | DE 102017123077 A1 | 11-04-2019 |
| | | DK 3692258 T3 | 06-09-2021 |
| | | EP 3692258 A1 | 12-08-2020 |
| | | WO 2019068606 A1 | 11-04-2019 |
| US 2013183151 A1 | 18-07-2013 | BR 102013000701 A2 | 19-05-2015 |
| | | CN 103206342 A | 17-07-2013 |
| | | EP 2615303 A1 | 17-07-2013 |
| | | ES 2532177 T3 | 24-03-2015 |
| | | US 2013183151 A1 | 18-07-2013 |

Für nähere Einzelheiten zu diesem Anhang : siehe Amtsblatt des Europäischen Patentamts, Nr.12/82

EPO FORM P0461

Seite 2 von 2